# EUROPEAN PATENT SPECIFICATION

(11) **EP 3 043 573 B1**
(45) Date of publication and mention of the grant of the patent: **21.03.2018**
(21) Application number: 14862804.3
(22) Date of filing: 04.11.2014
(51) Int. Cl.: H04Q 11/00, H04L 29/06, H04M 7/00, H04B 10/27

(54) **VOICE SERVICE IMPLEMENTATION METHOD, DEVICE AND SYSTEM**
VERFAHREN, VORRICHTUNG UND SYSTEM ZUR IMPLEMENTIERUNG EINES SPRACHDIENSTES
PROCÉDÉ, DISPOSITIF ET SYSTÈME DE MISE EN OEUVRE DE SERVICE VOCAL

(30) Priority: 12.11.2013 CN 201310562018
(43) Date of publication of application: 13.07.2016
(73) Proprietor: Huawei Technologies Co., Ltd., Longgang District Shenzhen, Guangdong 518129 (CN)
(72) Inventor: ZHENG, Ruobin, Shenzhen Guangdong 518129 (CN)
(74) Representative: Thun, Clemens
(86) International application number: PCT/CN2014/090266
(87) International publication number: WO 2015/070716

(56) References cited:
- EP-A1- 2 640 048
- CN-A- 1 731 750
- CN-A- 101 110 737
- CN-A- 101 902 293
- CN-A- 102 572 622
- US-A1- 2002 032 765
- US-A1- 2002 033 416
- US-A1- 2005 091 407
- US-A1- 2010 014 868

## Description

### TECHNICAL FIELD

The present invention relates to telecommunication network access technologies, and in particular, to a voice service implementation method, device, and system.

### BACKGROUND

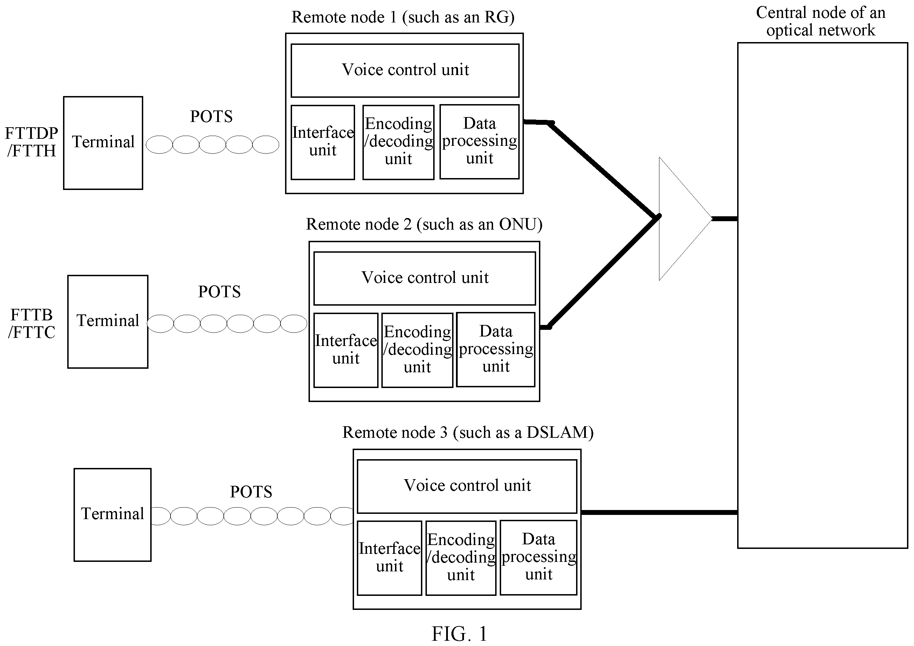

Referring to FIG. 1, FIG. 1 is a schematic architectural diagram of a voice service-based access network, which includes a passive optical access network and an active optical access network. For example, the passive optical access network may be fiber to the x (FTTx); the active optical access network includes a remote node (such as a digital subscriber line access multiplexer (DSLAM)), which is connected to the Ethernet and an optical line terminal (OLT) edge node or an IP edge node, and the OLT edge node or the IP edge node is connected to an access point, such as a proxy call session control function (P-CSCF), of an IP multimedia subsystem (IMS) core network. A remote node in the passive optical access network may be customer premises equipment (CPE), an optical network terminal (ONT), an optical network unit (ONU), or a multi-dwelling unit (MDU). The remote node in the active optical access network may be a DSLAM, or the like. The CPE may be a residential gateway (RG) or an access gateway (AG). To support a voice service, a digital signal processing (DSP) functional unit and a voice control unit in a remote node function as voice gateways, and therefore voice service configuration needs to be performed on the remote node. For example, US 2005/0091407 A1 refers to a multi network exchange system for telephony applications. Further, US 2002/0032765A1 refers to an intelligent network providing network access services. Further, US 2002/0033416A1 refers to a network server platform for providing integrated billing for CATV, Internet, telephony and enhanced bandwidth services. Further, EP 2 640 048A1 refers to a passive optical network terminal. Further, US 2010/0014868A1 refers to hybrid optical/wireless RF transceiver modules and photonic network components.

However, operators use a fiber to the distribution point (FTTDP) manner for a very long time, that is, a fiber is connected to an outer wall of a family building, and a drop copper wire (such as a telephone twisted pair, a cable TV cable, an electrical power cable, or an Ethernet cable) or a wireless interface is used for connection; therefore, the copper wire does not disappear but develops together with the optical fiber. In an era in which an optical fiber and a copper wire develop together, a quantity of remote nodes in an FTTDP scenario is huge, causing relatively large workload of voice service configuration on the remote nodes, and more complex operation, maintenance, and management of the remote nodes.

### SUMMARY

The present invention is defined by the subject matter of the independent claims 1, 4 and 9. In view of this, embodiments of the present invention provide a voice service implementation method, device, and system, to reduce workload of voice service configuration on a remote node.

According to a first aspect, an embodiment of the present invention provides a voice service implementation method, including:
interacting, by a central node of an optical network, with a voice device and a remote node separately, and performing access control for the remote node, to establish a voice channel; and
performing, by the central node of the optical network, voice encoding processing on a first digital voice signal sent by the remote node, to obtain first voice data, and sending the first voice data to the voice device by using the voice channel; or performing, by the central node of the optical network, voice decoding processing on second voice data sent by the voice device, to obtain a second digital voice signal, and sending the second digital voice signal to the remote node by using the voice channel, wherein the interacting, by the central node of the optical network, with the voice device and the remote node separately, and performing access control for the remote node comprises:
   receiving, by the central node of the optical network, a first digital control signal sent by the remote node, wherein the first digital control signal is obtained by the remote node according to a first analog control signal that is sent by a terminal connected to the remote node;
   detecting, by the central node of the optical network, the first digital control signal, to obtain a second digital control signal of the terminal connected to the remote node; and
   sending, by the central node of the optical network, the second digital control signal to the remote node, so that the remote node obtains a second analog control signal according to the second digital control signal, and performs access control for the terminal according to the second analog control signal.

In a first implementation manner of the first aspect the method further includes:
sending, by the central node of the optical network, a session request message to the voice device, so that the voice device sends a retransmission stop indication to the central node of the optical network according to the session request message; and
stopping, by the central node of the optical network, according to the retransmission stop indication, sending the session request message to the voice device.

In a second implementation manner of the first aspect, the method further includes:
receiving, by the central node of the optical network, a first indication sent by the voice device;
obtaining, by the central node of the optical network, a third digital control signal according to the first indication; and
sending, by the central node of the optical network, the third digital control signal to the remote node, so that the remote node obtains a third analog control signal according to the third digital control signal, and performs access control for the terminal according to the third analog control signal, to establish the voice channel.

According to a second aspect of the present invention a voice service implementation method is provided, wherein the method comprises:
interacting, by a central node of an optical network, with a voice device and a remote node separately, and performing access control for the remote node, to establish a voice channel; and
performing, by the central node of the optical network, voice encoding processing on a first digital voice signal sent by the remote node, to obtain first voice data, and sending the first voice data to the voice device by using the voice channel; or performing, by the central node of the optical network, voice decoding processing on second voice data sent by the voice device, to obtain a second digital voice signal, and sending the second digital voice signal to the remote node by using the voice channel,
wherein the interacting, by the central node of the optical network, with the voice device and the remote node separately, and performing access control for the remote node comprises:
   receiving, by the central node of the optical network, a first indication sent by the voice device;
   obtaining, by the central node of the optical network, a first digital control signal according to the first indication; and
   sending, by the central node of the optical network, the first digital control signal to the remote node, so that the remote node performs access control for a terminal according to the first digital control signal.

In a first implementation manner of the second aspect, the method further includes:
receiving, by the central node of the optical network, a fifth digital control signal sent by the remote node, where the fifth digital control signal is obtained by the remote node according to a fifth analog control signal sent by the terminal; and
sending, by the central node of the optical network, a third indication to the voice device according to the fifth digital control signal, to instruct the voice device to send, according to the third indication, an acknowledgement message to the central node of the optical network, to establish the voice channel.

In a third implementation form of the first aspect or a second implementation form of the second aspect, the performing, by the central node of the optical network, voice encoding processing on a first digital voice signal sent by the remote node, to obtain first voice data includes:
receiving, by the central node of the optical network, the first digital voice signal sent by the remote node, where the first digital voice signal is obtained by the remote node according to a first analog voice signal sent by a terminal;
performing, by the central node of the optical network, voice encoding processing on the first digital voice signal, to obtain a third digital voice signal; and
obtaining, by the central node of the optical network, the first voice data according to the third digital voice signal.

In a fourth implementation form of the first aspect or a third implementation form of the second aspect, the performing, by the central node of the optical network, voice decoding processing on second voice data sent by the voice device, to obtain a second digital voice signal, and sending the second digital voice signal to the remote node by using the voice channel includes:
receiving, by the central node of the optical network, the second voice data sent by the voice device;
obtaining, by the central node of the optical network, a fourth digital voice signal according to the second voice data;
performing, by the central node of the optical network, voice decoding processing on the fourth digital voice signal, to obtain the second digital voice signal; and
sending, by the central node of the optical network, the second digital voice signal to the remote node, so that the remote node obtains a second analog voice signal according to the second digital voice signal, and sends the second analog voice signal to a terminal.

In a fifth implementation form of the first aspect or a fourth implementation form of the second aspect, the method further includes:
receiving, by the central node of the optical network, a digital on-hook control signal sent by the remote node, where the digital on-hook control signal is obtained by the remote node according to an analog on-hook control signal sent by a terminal;
detecting, by the central node of the optical network, the digital on-hook control signal, to obtain an on-hook indication; and
sending, by the central node of the optical network, the on-hook indication to the voice device, so that the voice device releases a voice service resource according to the on-hook indication.

According to a third aspect, a central node is provided configured to perform any of the above methods

It can be seen from the foregoing technical solutions that the embodiments of the present invention have the following beneficial effects:

A central node of an optical network performs access control for a voice service and voice encoding/decoding processing of voice data, voice service configuration needs to be performed only on the central node of the optical network, and the voice service does not need to be configured on each remote node, which simplifies configuration on the remote node; therefore, a failure probability of the remote node can be reduced, workload of voice service configuration on the remote node can be reduced, and complexity of operation, maintenance, and management of the remote node can be reduced.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a voice service-based access network in the prior art;
FIG. 2 is a schematic flowchart of a voice service implementation method 1 according to an embodiment of the present invention;
FIG. 3 is a schematic architectural diagram of a voice service-based access network according to an embodiment of the present invention;
FIG. 4 is a schematic flowchart of a voice service implementation method 2 according to an embodiment of the present invention;
FIG. 5 is a schematic flowchart of a voice service implementation method 3 according to an embodiment of the present invention;
FIG. 6 is a schematic flowchart of Embodiment 1 of a voice service implementation method according to an embodiment of the present invention;
FIG. 7 is a schematic flowchart of Embodiment 2 of a voice service implementation method according to an embodiment of the present invention;
FIG. 8 is a schematic flowchart of Embodiment 3 of a voice service implementation method according to an embodiment of the present invention;
FIG. 9 is a functional block diagram of a central node of an optical network according to an embodiment of the present invention;
FIG. 10 is a schematic structural diagram of a central node of an optical network according to an embodiment of the present invention;
FIG. 11 is a functional block diagram of a remote node according to an embodiment of the present invention;
FIG. 12 is a schematic structural diagram of a remote node according to an embodiment of the present invention;
FIG. 13 is a functional block diagram of a voice device according to an embodiment of the present invention;
FIG. 14 is a schematic structural diagram of a voice device according to an embodiment of the present invention; and
FIG. 15 is a functional block diagram of a voice service implementation system according to an embodiment of the present invention.

### DESCRIPTION OF EMBODIMENTS

To make the objectives, technical solutions, and advantages of the present invention clearer, the present invention is described below in detail with reference to accompanying drawings and specific embodiments.

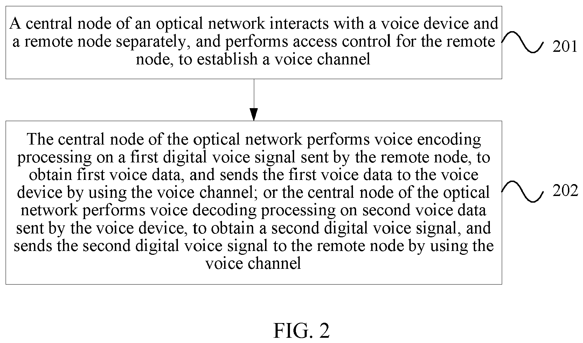

An embodiment of the present invention provides a voice service implementation method. Referring to FIG. 2, FIG. 2 is a schematic flowchart of a voice service implementation method 1 according to an embodiment of the present invention and is a schematic flowchart for a central node of an optical network in a voice service access system. As shown in the figure, the method includes the following steps:
Step 201: A central node of an optical network interacts with a voice device and a remote node separately, and performs access control for the remote node, to establish a voice channel.

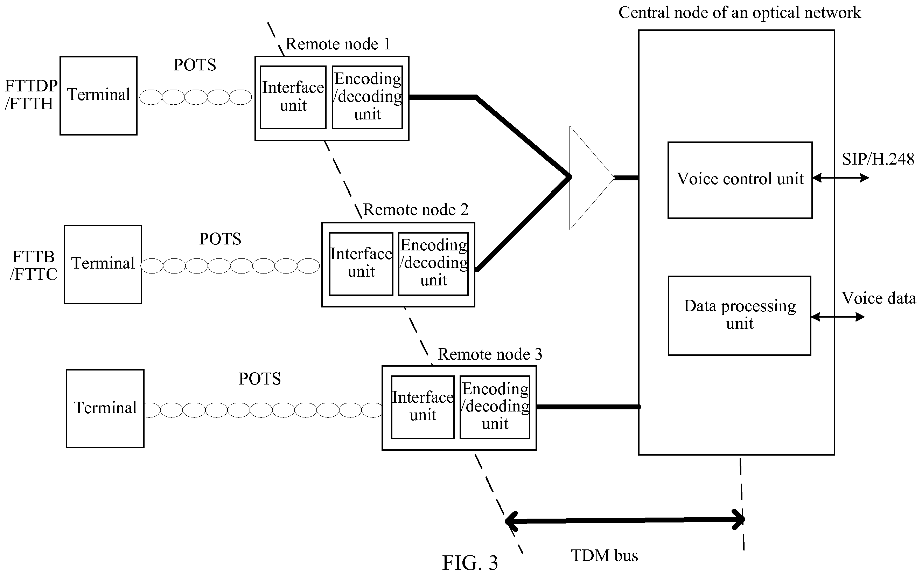

To resolve a problem in the prior art that workload of voice service configuration on the remote node is relatively large, and operation, maintenance, and management are complex, referring to FIG. 3, in this embodiment of the present invention, each remote node includes only a first interface unit, an encoding/decoding unit, and a second interface unit (an interface unit in FIG. 3 includes a first interface unit and a second interface unit), where the encoding/decoding unit may be configured to implement mutual conversion between an analog signal and a digital signal. A voice control unit and a data processing unit that are originally included in each remote node are moved up to the central node of the optical network; in this way, the central node of the optical network performs unified access control for remote nodes connected to the central node of the optical network, and transmits voice data between a terminal and a voice device. In this way, voice service configuration needs to be performed only on the central node of the optical network, and a voice service does not need to be configured on each remote node one by one; therefore, operation and maintenance costs and management costs of the remote node can be greatly reduced for operators, and manpower and material resources are saved.

The remote node may include a DSLAM, CPE, an ONT, an ONU, or an MDU, and the CPE may include an RG or an AR. The first interface unit may be a subscriber line interface circuit (SLIC) unit, the encoding/decoding unit may be a coder/decoder (CODEC), and the second interface unit may be a time division multiplexing (TDM) interface unit.

The central node of the optical network may be an OLT edge node or an IP edge node. The data processing unit of the central node of the optical network may be a digital signal processing (DSP) unit.

The voice device may include a voice service proxy device, an access controller connected to a second terminal, a VoIP telephone set, or a remote node connected to the second terminal. The voice service proxy device may be a P-CSCF device of an IMS core network.

In this embodiment of the present invention, when a terminal connected to the remote node is a calling terminal, the interacting, by a central node of an optical network, with a voice device and a remote node separately, and performing access control for the remote node, to establish a voice channel specifically includes:
receiving, by the central node of the optical network, a first digital control signal sent by the remote node, where the first digital control signal is obtained by the remote node according to a first analog control signal that is sent by the terminal connected to the remote node; detecting, by the central node of the optical network, the first digital control signal, to obtain a second digital control signal of the terminal connected to the remote node; and sending, by the central node of the optical network, the second digital control signal to the remote node, so that the remote node obtains a second analog control signal according to the second digital control signal, and performs access control for the terminal according to the second analog control signal.
Preferably, the method may further include: sending, by the central node of the optical network, a session request message to the voice device, so that the voice device sends a retransmission stop indication to the central node of the optical network according to the session request message; and stopping, by the central node of the optical network, according to the retransmission stop indication, sending the session request message to the voice device.

Alternatively, the method may further include: receiving, by the central node of the optical network, a first indication sent by the voice device; obtaining, by the central node of the optical network, a third digital control signal according to the first indication; and sending, by the central node of the optical network, the third digital control signal to the remote node, so that the remote node obtains a third analog control signal according to the third digital control signal, and performs access control for the terminal according to the third analog control signal, to establish the voice channel.

When a terminal connected to the remote node is a called terminal, the interacting, by a central node of an optical network, with a voice device and a remote node separately, and performing access control for the remote node, to establish a voice channel specifically includes:
receiving, by the central node of the optical network, a second indication sent by the voice device; obtaining, by the central node of the optical network, a fourth digital control signal according to the second indication; and sending, by the central node of the optical network, the fourth digital control signal to the remote node, so that the remote node performs access control for the terminal according to the fourth digital control signal.

Preferably, the method may further include: receiving, by the central node of the optical network, a fifth digital control signal sent by the remote node, where the fifth digital control signal is obtained by the remote node according to a fifth analog control signal sent by the terminal; and sending, by the central node of the optical network, a third indication to the voice device according to the fifth digital control signal, to instruct the voice device to send, according to the third indication, an acknowledgement message to the central node of the optical network, to establish the voice channel.

The first interface unit of the remote node is an interface between the terminal and the remote node, and is configured to feed power for the terminal and send voice data of a peer end to the terminal, for example, when the terminal is a calling terminal, the first interface unit is configured to receive a calling off-hook analog signal sent by the terminal, and is configured to send a dial tone analog signal to the terminal, and receive an analog signal, sent by the terminal, of an N^{th} dialing number, and so on.

The encoding/decoding unit of the remote node is configured to perform mutual conversion between an analog signal and a digital signal, that is, convert an analog signal received from the terminal into a digital signal, and convert a digital signal received from the central node of the optical network into an analog signal. For example, when the terminal is a calling terminal, the encoding/decoding unit is configured to convert a calling off-hook analog signal sent by the terminal into a calling off-hook digital signal, and convert a digital dial tone control signal sent by the central node of the optical network into an analog dial tone control signal.

The second interface unit of the remote node is an interface between the remote node and the central node of the optical network, and is configured to carry a digital signal in a manner of a TDM bus, to implement that a signal is transmitted between the remote node and the central node of the optical network in a manner of a cross-device TDM bus. For example, when the remote node and the central node of the optical network are nodes of passive optical network (PON), the remote node sends a digital signal to the central node of the optical network in a TDM over gigabit-capable passive optical network (GPON) encapsulation mode (GEM) (TDM over GEM) or a TDM over packet switched network (PSN) (TDM over PSN) manner; when the remote node and the central node of the optical network are nodes of Ethernet, the remote node sends a digital signal to the central node of the optical network in a TDM over PSN manner; the remote node is responsible only for a multiprotocol label switching (MPLS) data plane, and an MPLS control plane is implemented by the central node of the optical network. A digital control signal and a digital voice signal may be transmitted in a time division manner. For the TDM over GEM, a voice control GEM interface may be further set, for sending the digital control signal, and a voice data GEM interface may be set, for sending the digital voice signal, that is, different GEM interfaces are used to send the digital control signal and the digital voice signal.

The central node of the optical network includes a voice control unit and a data processing unit, and may further include an interface unit, where the interface unit may be a TDM interface unit whose function is similar to that of the foregoing TDM interface unit. The data processing unit mainly detects voice data and performs encoding/decoding processing, and may further perform echo cancellation processing, generate a dual tone multiple frequency (DTMF) signal, and the like; and is further configured to convert a digital voice signal into voice data, where the voice data includes a Voice over Internet Protocol (VoIP) packet or a voice text. In the prior art, when a digital voice signal is converted into a voice text, a voice recognition algorithm needs to be used, but implementation of the voice recognition algorithm is relatively complex and costs are relatively high, and therefore the voice recognition algorithm is difficult to be implemented on the remote node. Therefore, the data processing unit is moved up to the central node of the optical network, voice recognition may be implemented on a device of an operator, and implementation of the remote node is still simple and costs remain low.

The voice control unit of the central node of the optical network is configured to implement a control plane of a voice gateway, to perform access control for a voice service of the terminal, for example, process an analog control signal, to implement control of an instruction such as an on-hook processing instruction or a ringing instruction of the terminal; and may further implement a management plane such as configuration, operation, and maintenance of the voice service.

Voice service configuration may be performed by a user on the voice control unit of the central node of the optical network, for example, the configuration is as follows:
1) an SIP/H.248 interface, user data (such as a telephone number, an account, a password, and the like), a digit map, and the like;
2) POTS port data (for example, physical parameters such as a current and a voltage), where the POTS port data may be sent by the central node of the optical network to the remote node, to implement physical control of the remote node; and
3) configuration of a data query function, to implement data query on the central node of the optical network.

Preferably, the following functions may further be implemented on the voice control unit of the central node of the optical network:
1) collecting information related to the voice service in a unified manner and locating the terminal;
2) installing a patch on the central node of the optical network, to perform fault repair, where reset does not need to be performed on the remote node; and
3) performing unified voice service emulation testing on the central node of the optical network.

Step 202: The central node of the optical network performs voice encoding processing on a first digital voice signal sent by the remote node, to obtain first voice data, and sends the first voice data to the voice device by using the voice channel; or the central node of the optical network performs voice decoding processing on second voice data sent by the voice device, to obtain a second digital voice signal, and sends the second digital voice signal to the remote node by using the voice channel.

Specifically, the central node of the optical network receives the first digital voice signal sent by the remote node, where the first digital voice signal is obtained by the remote node according to a first analog voice signal sent by the terminal; the central node of the optical network performs voice encoding processing on the first digital voice signal, to obtain a third digital voice signal; the central node of the optical network obtains the first voice data according to the third digital voice signal; and the central node of the optical network sends the first voice data to the voice device by using the voice channel.

Alternatively, the central node of the optical network receives the second voice data sent by the voice device; the central node of the optical network obtains a fourth digital voice signal according to the second voice data; the central node of the optical network performs voice decoding processing on the fourth digital voice signal, to obtain the second digital voice signal; and the central node of the optical network sends the second digital voice signal to the remote node, so that the remote node obtains a second analog voice signal according to the second digital voice signal, and sends the second analog voice signal to the terminal.

After step 202, the method may further include a voice service resource release process, and the release process includes:
receiving, by the central node of the optical network, a digital on-hook control signal sent by the remote node, where the digital on-hook control signal is obtained by the remote node according to an analog on-hook control signal sent by a terminal;
detecting, by the central node of the optical network, the digital on-hook control signal, to obtain an on-hook indication; and
sending, by the central node of the optical network, the on-hook indication to the voice device, so that the voice device releases a voice service resource according to the on-hook indication.

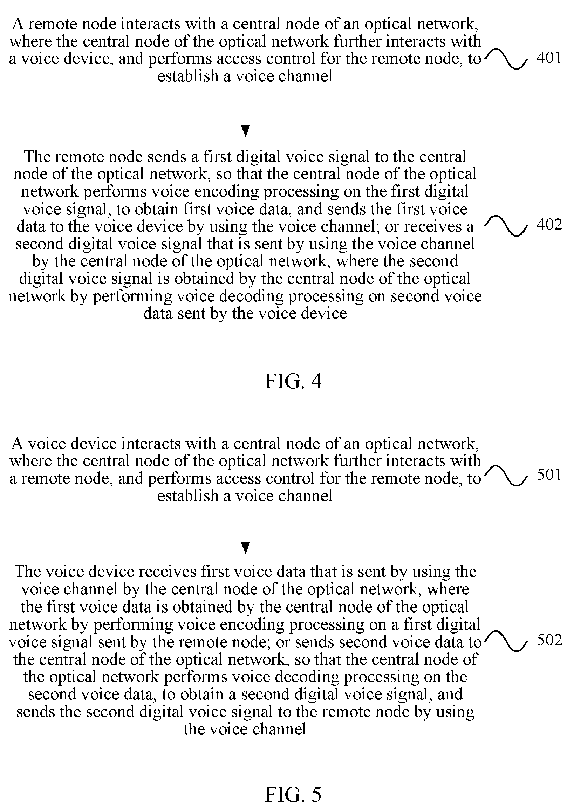

An embodiment of the present invention further provides a voice service implementation method. Referring to FIG. 4, FIG. 4 is a schematic flowchart of a voice service implementation method 2 according to an embodiment of the present invention and is a schematic flowchart for a remote node in a voice service access system. As shown in the figure, the method includes the following steps:
Step 401: A remote node interacts with a central node of an optical network, where the central node of the optical network further interacts with a voice device, and performs access control for the remote node, to establish a voice channel.
Step 402: The remote node sends a first digital voice signal to the central node of the optical network, so that the central node of the optical network performs voice encoding processing on the first digital voice signal, to obtain first voice data, and sends the first voice data to the voice device by using the voice channel; or receives a second digital voice signal that is sent by using the voice channel by the central node of the optical network, where the second digital voice signal is obtained by the central node of the optical network by performing voice decoding processing on second voice data sent by the voice device.

After step 402, the method may further include a voice service resource release process, and the release process includes:
receiving, by the remote node, an analog on-hook control signal sent by a terminal;
obtaining, by the remote node, a digital on-hook control signal according to the analog on-hook control signal; and
sending, by the remote node, the digital on-hook control signal to the central node of the optical network, so that the central node of the optical network detects the digital on-hook control signal, to obtain an on-hook indication, and sends the on-hook indication to the voice device, where the on-hook indication is used to instruct the voice device to release a voice service resource.

An embodiment of the present invention further provides a voice service implementation method. Referring to FIG. 5, FIG. 5 is a schematic flowchart of a voice service implementation method 3 according to an embodiment of the present invention and is a schematic flowchart for a voice device in a voice service access system. As shown in the figure, the method includes the following steps:
Step 501: A voice device interacts with a central node of an optical network, where the central node of the optical network further interacts with a remote node, and performs access control for the remote node, to establish a voice channel.
Step 502: The voice device receives first voice data that is sent by using the voice channel by the central node of the optical network, where the first voice data is obtained by the central node of the optical network by performing voice encoding processing on a first digital voice signal sent by the remote node; or sends second voice data to the central node of the optical network, so that the central node of the optical network performs voice decoding processing on the second voice data, to obtain a second digital voice signal, and sends the second digital voice signal to the remote node by using the voice channel.

After step 502, the method may further include a voice service resource release process, and the release process includes:
receiving, by the voice device, an on-hook indication sent by the central node of the optical network, where the on-hook indication is obtained by the central node of the optical network by detecting a digital on-hook control signal sent by the remote node, and the digital on-hook control signal is obtained by the remote node according to an analog on-hook control signal sent by a terminal; and
releasing, by the voice device, a voice service resource according to the on-hook indication.

In the foregoing method 1 to method 3:
The first analog control signal is an analog calling off-hook control signal, the first digital control signal is a digital calling off-hook control signal, the second digital control signal is a digital dial tone control signal, and the second analog control signal is an analog dial tone control signal; or the first analog control signal is an analog control signal of an N^{th} dialing number, the first digital control signal is a digital control signal of the N^{th} dialing number, the second digital control signal is a digital control signal for stopping a dial tone, and the second analog control signal is an analog control signal for stopping the dial tone.

The session request message may be an INVITE message, and the retransmission stop indication is a 100 response message.

The first indication may be a 180 response message, the third digital control signal may be a digital ringback tone control signal, and the third analog control signal may be an analog ringback tone control signal.

The second indication may be an INVITE message, and the fourth digital control signal may be a digital called ringing control signal.

The fifth analog control signal may be an analog called off-hook control signal, the fifth digital control signal may be a digital called off-hook control signal, the third indication may be a 200 response message, and the acknowledgement message may be an ACK message.

The first voice data and the second voice data may be a VoIP packet or a voice text.

### Embodiment 1

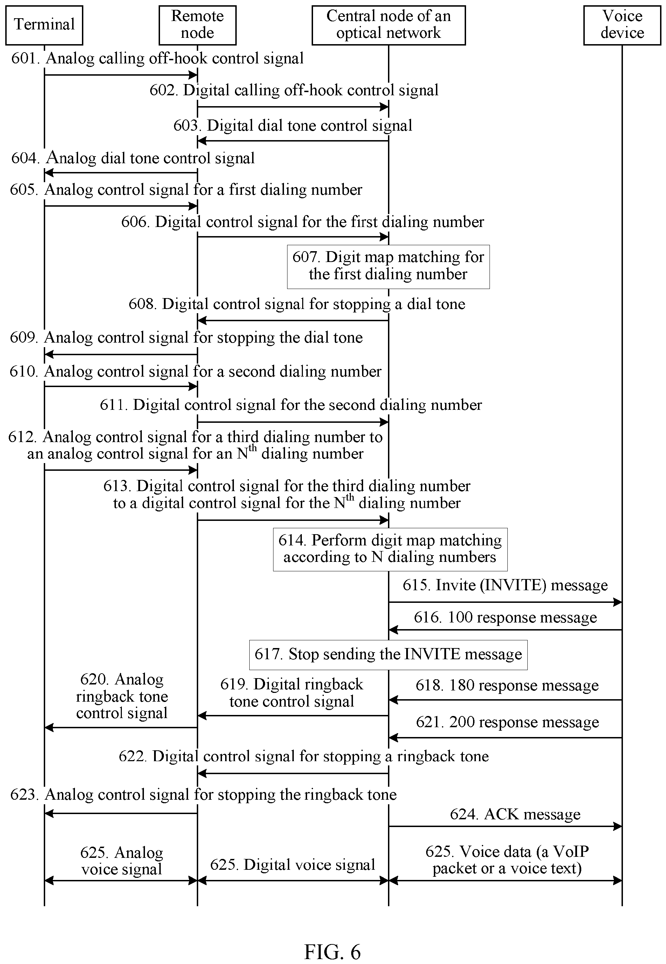

Referring to FIG. 6, FIG. 6 is a schematic flowchart of Embodiment 1 of a voice service implementation method according to an embodiment of the present invention. This embodiment is a voice service implementation method when the foregoing terminal is a calling terminal in a voice service. In this embodiment, an analog signal is transmitted between the terminal and a remote node, a digital signal is transmitted between the remote node and a central node of an optical network, and the central node of the optical network and a voice device interact with each other by using SIP signaling or H.248 signaling. As shown in FIG. 6, the method includes the following steps:
Step 601: A terminal picks up, and the terminal generates an analog calling off-hook control signal, and sends the analog calling off-hook control signal to a remote node.
Step 602: The remote node receives the analog calling off-hook control signal sent by the terminal, and converts the analog calling off-hook control signal into a digital calling off-hook control signal, and sends the digital calling off-hook control signal to a central node of an optical network.
Step 603: The central node of the optical network receives the digital calling off-hook control signal, and detects the digital calling off-hook control signal by means of DSP, to determine that a dial tone needs to be played for the terminal, and then the central node of the optical network generates a digital dial tone control signal by means of the DSP, and then sends the digital dial tone control signal to the remote node, where the digital dial tone control signal is used to control the calling terminal to play or stop playing the dial tone, and is further used to control playback frequency of the dial tone, and the like.
Step 604: The remote node receives the digital dial tone control signal, and obtains an analog dial tone control signal according to the digital dial tone control signal, and then keeps sending the analog dial tone control signal to the terminal, to instruct the terminal to play the dial tone.
Step 605: The terminal sends an analog control signal of a first dialing number to the remote node.
Step 606: The remote node receives the analog control signal of the first dialing number, converts the analog control signal of the first dialing number into a digital control signal of the first dialing number, and then sends the digital control signal of the first dialing number to the central node of the optical network.
Step 607: The central node of the optical network receives the digital control signal of the first dialing number, and detects the digital control signal of the first dialing number by means of the DSP, to obtain the first dialing number, and then performs digit map matching according to the first dialing number.
Step 608: The central node of the optical network sends a digital control signal for stopping the dial tone to the remote node.
Step 609: The remote node converts, according to the digital control signal for stopping the dial tone, the digital control signal for stopping the dial tone into an analog control signal for stopping the dial tone, and sends the analog control signal for stopping the dial tone to the terminal, to control the terminal to stop playing the dial tone.
Step 610: The terminal sends an analog control signal of a second dialing number to the remote node.
Step 611: The remote node receives the analog control signal of the second dialing number, converts the analog control signal of the second dialing number into a digital control signal of the second dialing number, and then sends the digital control signal of the second dialing number to the central node of the optical network.
Step 612: The terminal sends an analog control signal of a third dialing number, an analog control signal of a fourth dialing number, ..., and an analog control signal of an N^{th} dialing number to the remote node.
Step 613: The remote node receives the analog control signal of the third dialing number, the analog control signal of the fourth dialing number, ..., and the analog control signal of the N^{th} dialing number, and converts received analog control signals into corresponding digital control signals, to obtain digital control signals of N dialing numbers; and then sends the digital control signals of the N dialing numbers to the central node of the optical network.
Step 614: The central node of the optical network receives the digital control signals of the N dialing numbers, detects the digital control signals of the N dialing numbers by means of the DSP, to obtain the N dialing numbers, then performs digit map matching according to the N dialing numbers to obtain a corresponding digit map, then determines a called terminal according to the digit map, and then generates an INVITE message, which carries an identifier of the called terminal.
Step 615: The central node of the optical network sends the INVITE message to the voice device.
Step 616: After receiving the INVITE message, the voice device sends a 100 response message to the central node of the optical network.
Step 617: The central node of the optical network receives the 100 response message, and stops sending the INVITE message to the voice device if the central node of the optical network determines, according to the 100 response message, that the voice device receives the INVITE message.
Step 618: The voice device sends a 180 response message to the central node of the optical network.
Step 619: The central node of the optical network receives the 180 response message, where the 180 response message is used to indicate that the called terminal has rung; then the central node of the optical network determines that the calling terminal needs to play a ringback tone, and the central node of the optical network generates a digital ringback tone control signal by means of the DSP, and then sends the digital ringback tone control signal to the remote node, where the digital ringback tone control signal is used to control the calling terminal to play the ringback tone or stop playing the ringback tone, and is further used to control playback frequency of the ringback tone.
Step 620: The remote node receives the digital ringback tone control signal, then converts the digital ringback tone control signal into an analog ringback tone control signal, and sends the analog ringback tone control signal to the calling terminal, so that the calling terminal plays the ringback tone.
Step 621: The voice device sends a 200 response message to the remote node.
Step 622: The central node of the optical network receives the 200 response message, where the 200 response message is used to indicate that the called terminal has picked up; then the central node of the optical network determines that it is needed to instruct the calling terminal to stop playing the ringback tone, and then generates a digital control signal for stopping the ringback tone by means of the DSP, and the central node of the optical network sets a current stream mode into a two-way stream mode; and the central node of the optical network sends the digital control signal for stopping the ringback tone to the remote node.
Step 623: The remote node receives the digital control signal for stopping the ringback tone, converts the digital control signal for stopping the ringback tone into an analog control signal for stopping the ringback tone, and then sends the analog control signal for stopping the ringback tone to the terminal, so that the terminal stops playing the ringback tone.
Step 624: The central node of the optical network sends an ACK message to the voice device, to establish a voice channel.
Step 625: The calling terminal makes a voice call to the called terminal, and the remote node implements conversion between an analog voice signal and a digital voice signal; the central node of the optical network transmits voice data between the remote node and the voice device by using the established voice channel, to implement conversion between the voice data and the digital voice signal. For example, the central node of the optical network receives a digital voice signal from the remote node, and then converts the digital voice signal into a voice text, and sends the voice text to the remote node; or the central node of the optical network receives a voice text sent by the voice device, and the central node of the optical network converts the voice text into a digital voice signal, and sends the digital voice signal to the remote node, so that the remote node obtains an analog voice signal according to the digital voice signal, and sends the analog voice signal to the terminal.

### Embodiment 2

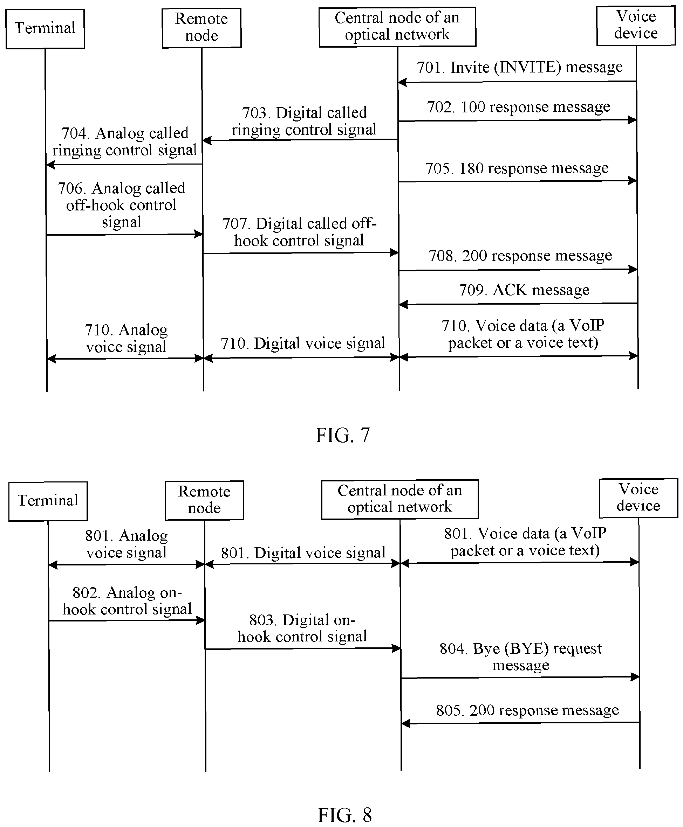

Referring to FIG. 7, FIG. 7 is a schematic flowchart of Embodiment 2 of a voice service implementation method according to an embodiment of the present invention. This embodiment is a voice service implementation method when the foregoing terminal is a called terminal in a voice service. In this embodiment, an analog signal is transmitted between the terminal and a remote node, a digital signal is transmitted between the remote node and a central node of an optical network, and the central node of the optical network and a voice device interact with each other by using SIP signaling or H.248 signaling. As shown in FIG. 7, the method includes the following steps:
Step 701: A voice device sends an INVITE message to a central node of an optical network, where the INVITE message carries an identifier of a terminal, and the terminal is a called terminal of a current voice service.
Step 702: After receiving the INVITE message, the central node of the optical network generates a 100 response message; then the central node of the optical network determines the called terminal according to the identifier of the terminal, carried in the INVITE message, and generates a 180 response message; and the central node of the optical network sends the 100 response message to the voice device, to instruct the voice device to stop sending the INVITE message.
Step 703: The central node of the optical network generates a digital called ringing control signal by means of DSP, then sends the digital called ringing control signal to a remote node connected to the terminal, where the digital called ringing control signal may control the terminal to start ringing and to stop ringing, and may further control frequency of ringing.
Step 704: The remote node receives the digital called ringing control signal, converts the digital called ringing control signal into an analog called ringing control signal, and then sends the analog called ringing control signal to the terminal, to control the terminal to ring.
Step 705: The central node of the optical network sends the 180 response message to the voice device, to indicate that the called terminal is ringing.
Step 706: The terminal picks up, and the terminal generates an analog called off-hook control signal, and sends the analog called off-hook control signal to the remote node.
Step 707: The remote node receives the analog called off-hook control signal, converts the analog called off-hook control signal into a digital called off-hook control signal, and then sends the digital called off-hook control signal to the central node of the optical network.
Step 708: The central node of the optical network receives the digital called off-hook control signal, and detects the digital called off-hook control signal by means of the DSP, to determine that a 200 response message needs to be generated, where the 200 response message is used to indicate that the terminal has picked up; the central node of the optical network sends the 200 response message to the voice device, where the 200 response message is used to indicate that the terminal has picked up.
Step 709: The voice device sends an ACK message to the central node of the optical network, and the central node of the optical network receives the ACK message, to establish a voice channel.
Step 710: A calling terminal makes a voice call to the called terminal, and the remote node implements conversion between an analog voice signal and a digital voice signal; the central node of the optical network transmits voice data between the remote node and the voice device by using the established voice channel, to implement conversion between the voice data and the digital voice signal. For example, the central node of the optical network receives a digital voice signal from the remote node, and then converts the digital voice signal into a voice text, and sends the voice text to the remote node; or the central node of the optical network receives a voice text sent by the voice device, and the central node of the optical network converts the voice text into a digital voice signal, and sends the digital voice signal to the remote node, so that the remote node obtains an analog voice signal according to the digital voice signal, and sends the analog voice signal to the terminal.

### Embodiment 3

Referring to FIG. 8, FIG. 8 is a schematic flowchart of Embodiment 3 of a voice service implementation method according to an embodiment of the present invention. This embodiment is a voice service implementation method when the foregoing terminal actively hangs up in a voice service. In this embodiment, an analog signal is transmitted between the terminal and a remote node, a digital signal is transmitted between the remote node and a central node of an optical network, and the central node of the optical network and the voice device interact with each other by using SIP signaling or H.248 signaling. As shown in FIG. 8, the method includes the following steps:
Step 801: Two terminals make a voice call.
Step 802: A first terminal hangs up, and the first terminal generates an analog on-hook control signal, and then sends the analog on-hook control signal to a remote node connected to the first terminal.
Step 803: The remote node receives the analog on-hook control signal sent by the first terminal, and converts the analog on-hook control signal into a digital on-hook control signal, and sends the digital on-hook control signal to a central node of an optical network.
Step 804: The central node of the optical network receives the digital on-hook control signal, and detects the digital on-hook control signal by means of DSP, to determine that the first terminal hangs up, and then generates a BYE request message; the central node of the optical network sends the BYE request message to the voice device, to instruct the voice device to release a DSP resource allocated to the first terminal.
Step 805: The voice device sends a 200 response message to the central node of the optical network, to indicate that the DSP resource of the first terminal has been released.

Embodiments of the present invention further provide apparatus embodiments for implementing steps and methods in the foregoing method embodiments.

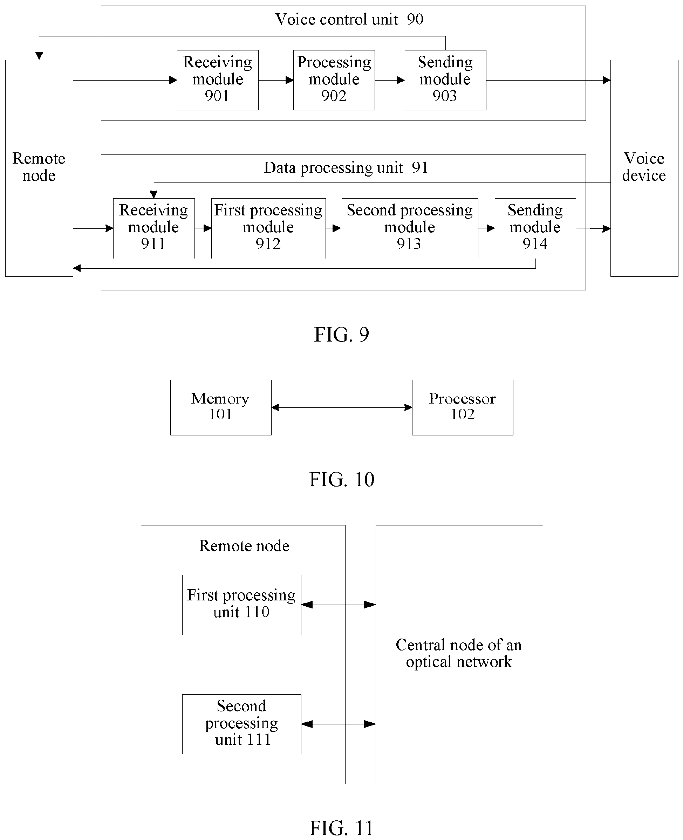

Referring to FIG. 9, FIG. 9 is a functional block diagram of a central node of an optical network according to an embodiment of the present invention. As shown in the figure, the central node of the optical network includes:
a voice control unit 90, configured to interact with a voice device and a remote node separately, and perform access control for the remote node, to establish a voice channel; and
a data processing unit 91, configured to perform voice encoding processing on a first digital voice signal sent by the remote node, to obtain first voice data, and send the first voice data to the voice device by using the voice channel; or perform, by the central node of the optical network, voice decoding processing on second voice data sent by the voice device, to obtain a second digital voice signal, and send the second digital voice signal to the remote node by using the voice channel.

The voice control unit 90 further includes:
a receiving module 901, configured to receive a first digital control signal sent by the remote node, where the first digital control signal is obtained by the remote node according to a first analog control signal that is sent by a terminal connected to the remote node;
a processing module 902, configured to detect the first digital control signal, to obtain a second digital control signal of the terminal connected to the remote node; and
a sending module 903, configured to send the second digital control signal to the remote node, so that the remote node obtains a second analog control signal according to the second digital control signal, and performs access control for the terminal according to the second analog control signal.

The sending module 903 is further configured to send a session request message to the voice device, so that the voice device sends a retransmission stop indication to the central node of the optical network according to the session request message; and
the sending module 903 is further configured to stop, according to the retransmission stop indication, sending the session request message to the voice device.

The receiving module 901 is further configured to receive a first indication sent by the voice device;
the processing module 902 is further configured to obtain a third digital control signal according to the first indication; and
the sending module 903 is further configured to send the third digital control signal to the remote node, so that the remote node obtains a third analog control signal according to the third digital control signal, and performs access control for the terminal according to the third analog control signal, to establish the voice channel.

Alternatively, the voice control unit 90 further includes:
a receiving module 901, configured to receive a second indication sent by the voice device;
a processing module 902, configured to obtain a fourth digital control signal according to the second indication; and
a sending module 903, configured to send the fourth digital control signal to the remote node, so that the remote node performs access control for a terminal according to the fourth digital control signal.

The receiving module 901 is further configured to receive a fifth digital control signal sent by the remote node, where the fifth digital control signal is obtained by the remote node according to a fifth analog control signal sent by the terminal; and
the sending module 903 is further configured to send a third indication to the voice device according to the fifth digital control signal, to instruct the voice device to send, according to the third indication, an acknowledgement message to the central node of the optical network, to establish the voice channel.

The data processing unit 91 further includes:
a receiving module 911, configured to receive the first digital voice signal sent by the remote node, where the first digital voice signal is obtained by the remote node according to a first analog voice signal sent by a terminal;
a first processing module 912, configured to perform voice encoding processing on the first digital voice signal, to obtain a third digital voice signal; and
a second processing module 913, configured to obtain the first voice data according to the third digital voice signal.

Alternatively, the data processing unit 91 further includes:
a receiving module 911, configured to receive the second voice data sent by the voice device;
a first processing module 912, configured to obtain a fourth digital voice signal according to the second voice data;
a second processing module 913, configured to perform voice decoding processing on the fourth digital voice signal, to obtain the second digital voice signal; and
a sending module 914, configured to send the second digital voice signal to the remote node, so that the remote node obtains a second analog voice signal according to the second digital voice signal, and sends the second analog voice signal to a terminal.

Alternatively, the voice control unit 90 further includes:
a receiving module 901, configured to receive a digital on-hook control signal sent by the remote node, where the digital on-hook control signal is obtained by the remote node according to an analog on-hook control signal sent by a terminal;
a processing module 902, configured to detect the digital on-hook control signal, to obtain an on-hook indication; and
a sending module 903, configured to send the on-hook indication to the voice device, so that the voice device releases a voice service resource according to the on-hook indication.

Referring to FIG. 10, FIG. 10 is a schematic structural diagram of a central node of an optical network according to an embodiment of the present invention. As shown in the figure, the central node of the optical network includes:
a memory 101, configured to store information that includes a program routine; and
a processor 102, coupled to the memory 101, and configured to control execution of the program routine, specifically including: interacting with a voice device and a remote node separately, and performing access control for the remote node, to establish a voice channel; and performing voice encoding processing on a first digital voice signal sent by the remote node, to obtain first voice data, and sending the first voice data to the voice device by using the voice channel; or performing voice decoding processing on second voice data sent by the voice device, to obtain a second digital voice signal, and sending the second digital voice signal to the remote node by using the voice channel.

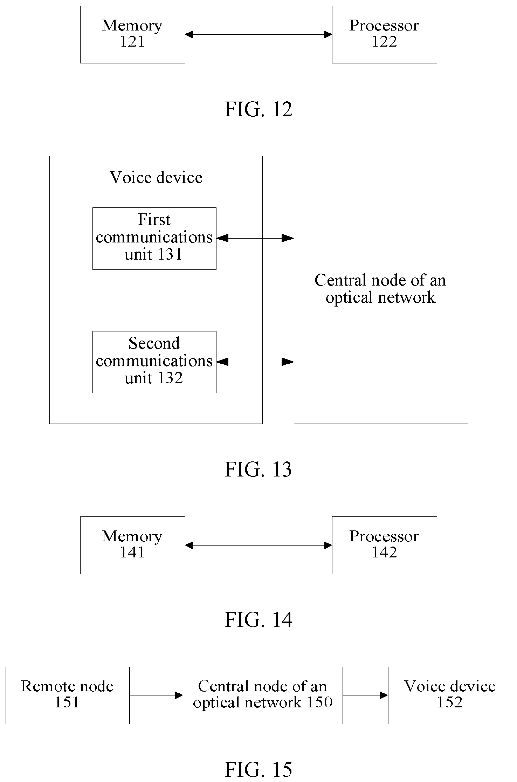

The processor 102 corresponds to the voice control unit 90 and the data processing unit 91 in FIG. 9. Referring to FIG. 11, FIG. 11 is a functional block diagram of a remote node according to an embodiment of the present invention. As shown in the figure, the remote node includes:
a first processing unit 110, configured to interact with a central node of an optical network, where the central node of the optical network further interacts with a voice device, and performs access control for the remote node, to establish a voice channel; and
a second processing unit 111, configured to send a first digital voice signal to the central node of the optical network, so that the central node of the optical network performs voice encoding processing on the first digital voice signal, to obtain first voice data, and sends the first voice data to the voice device by using the voice channel; or configured to receive a second digital voice signal that is sent by using the voice channel by the central node of the optical network, where the second digital voice signal is obtained by the central node of the optical network by performing voice decoding processing on second voice data sent by the voice device. Referring to FIG. 12, FIG. 12 is a schematic structural diagram of a remote node according to an embodiment of the present invention. As shown in the figure, the remote node includes:
   a memory 121, configured to store information that includes a program routine; and
   a processor 122, coupled to the memory 121, and configured to control execution of the program routine, specifically including: interacting with a central node of an optical network, where the central node of the optical network further interacts with a voice device, and performs access control for the remote node, to establish a voice channel; and sending a first digital voice signal to the central node of the optical network, so that the central node of the optical network performs voice encoding processing on the first digital voice signal, to obtain first voice data, and sends the first voice data to the voice device by using the voice channel; or receiving a second digital voice signal that is sent by using the voice channel by the central node of the optical network, where the second digital voice signal is obtained by the central node of the optical network by performing voice decoding processing on second voice data sent by the voice device.

The processor 122 corresponds to the first processing unit 110 and the second processing unit 111 in FIG. 11. Referring to FIG. 13, FIG. 13 is a functional block diagram of a voice device according to an embodiment of the present invention. As shown in the figure, the voice device includes:
a first communications unit 131, configured to interact with a central node of an optical network, where the central node of the optical network further interacts with a remote node, and performs access control for the remote node, to establish a voice channel; and
a second communications unit 132, configured to receive first voice data that is sent by using the voice channel by the central node of the optical network, where the first voice data is obtained by the central node of the optical network by performing voice encoding processing on a first digital voice signal sent by the remote node; or send second voice data to the central node of the optical network, so that the central node of the optical network performs voice decoding processing on the second voice data, to obtain a second digital voice signal, and sends the second digital voice signal to the remote node by using the voice channel.

Referring to FIG. 14, FIG. 14 is a schematic structural diagram of a voice device according to an embodiment of the present invention. As shown in the figure, the voice device includes:
a memory 141, configured to store information that includes a program routine; and
a processor 142, coupled to the memory 141, and configured to control execution of the program routine, specifically including: interacting with a central node of an optical network, where the central node of the optical network further interacts with a remote node, and performs access control for the remote node, to establish a voice channel; and receiving first voice data that is sent by using the voice channel by the central node of the optical network, where the first voice data is obtained by the central node of the optical network by performing voice encoding processing on a first digital voice signal sent by the remote node; or sending second voice data to the central node of the optical network, so that the central node of the optical network performs voice decoding processing on the second voice data, to obtain a second digital voice signal, sends the second digital voice signal to the remote node by using the voice channel, and transmits voice data between the remote node and the voice device by using the voice channel and the central node of the optical network.

The processor 142 corresponds to the first communications unit 131 and the second communications unit 132 in FIG. 13.

Referring to FIG. 15, FIG. 15 is a functional block diagram of a voice service implementation system according to an embodiment of the present invention. As shown in the figure, the system includes: a central node 150 of an optical network, a remote node 151, and a voice device 152, where
the central node 150 of the optical network is configured to interact with the voice device 152 and the remote node 151 separately, and perform access control for the remote node 151, to establish a voice channel; and
the central node 150 of the optical network is further configured to perform voice encoding processing on a first digital voice signal sent by the remote node 151, to obtain first voice data, and send the first voice data to the voice device 152 by using the voice channel; or perform, by the central node of the optical network, voice decoding processing on second voice data sent by the voice device 152, to obtain a second digital voice signal, and send the second digital voice signal to the remote node 151 by using the voice channel.

In the foregoing technical solutions of the present invention, a central node of an optical network performs access control for a voice service and processing of voice data, voice service configuration needs to be performed only on the central node of the optical network, and a voice service does not need to be configured on each remote node, which simplifies configuration on the remote node; therefore, a failure probability of the remote node can be reduced, workload of voice service configuration on the remote node can be reduced, and complexity of operation, maintenance, and management of the remote node can be reduced. In the cloud era, when network evolution is required for an access network, software and hardware upgrading may be performed on a remote node, and a data processing unit of a central node of an optical network is upgraded, so as to adapt to various evolution directions of a voice service, and to enable the access network to have relatively high flexibility.

The foregoing descriptions are merely exemplary embodiments of the present invention, but are not intended to limit the present invention. Any modification, equivalent replacement, or improvement made without departing from the principle of the present invention shall fall within the protection scope of the present invention.

## Claims

1. A voice service implementation method, wherein the method comprises:
interacting, by a central node of an optical network, with a voice device and a remote node separately, and performing access control for the remote node, to establish a voice channel (S 201); and
performing, by the central node of the optical network, voice encoding processing on a first digital voice signal sent by the remote node, to obtain first voice data, and sending the first voice data to the voice device by using the voice channel; or performing, by the central node of the optical network, voice decoding processing on second voice data sent by the voice device, to obtain a second digital voice signal, and sending the second digital voice signal to the remote node by using the voice channel (S202),
wherein the interacting, by the central node of the optical network, with the voice device and the remote node separately, and performing access control for the remote node comprises:
receiving, by the central node of the optical network, a first digital control signal sent by the remote node, wherein the first digital control signal is obtained by the remote node according to a first analog control signal that is sent by a terminal connected to the remote node (S 606);
detecting, by the central node of the optical network, the first digital control signal, to obtain a second digital control signal of the terminal connected to the remote node (S 607); and
sending, by the central node of the optical network, the second digital control signal to the remote node, so that the remote node obtains a second analog control signal according to the second digital control signal, and performs access control for the terminal according to the second analog control signal (S 608).

2. The method according to claim 1, wherein the method further comprises:
sending, by the central node of the optical network, a session request message to the voice device, so that the voice device sends a retransmission stop indication to the central node of the optical network according to the session request message; and
stopping, by the central node of the optical network, according to the retransmission stop indication, sending the session request message to the voice device.

3. The method according to claim 1, wherein the method further comprises:
receiving, by the central node of the optical network, a first indication sent by the voice device;
obtaining, by the central node of the optical network, a third digital control signal according to the first indication; and
sending, by the central node of the optical network, the third digital control signal to the remote node, so that the remote node obtains a third analog control signal according to the third digital control signal, and performs access control for the terminal according to the third analog control signal, to establish the voice channel.

4. A voice service implementation method, wherein the method comprises:
interacting, by a central node of an optical network, with a voice device and a remote node separately, and performing access control for the remote node, to establish a voice channel (S 201); and
performing, by the central node of the optical network, voice encoding processing on a first digital voice signal sent by the remote node, to obtain first voice data, and sending the first voice data to the voice device by using the voice channel; or performing, by the central node of the optical network, voice decoding processing on second voice data sent by the voice device, to obtain a second digital voice signal, and sending the second digital voice signal to the remote node by using the voice channel (S202),
wherein the interacting, by the central node of the optical network, with the voice device and the remote node separately, and performing access control for the remote node comprises:
receiving, by the central node of the optical network, a first indication sent by the voice device (S 701);
obtaining, by the central node of the optical network, a first digital control signal according to the first indication; and
sending, by the central node of the optical network, the first digital control signal to the remote node, so that the remote node performs access control for a terminal according to the first digital control signal (S703).

5. The method according to claim 4, wherein the method further comprises:
receiving, by the central node of the optical network, a second digital control signal sent by the remote node, wherein the second digital control signal is obtained by the remote node according to a first analog control signal sent by the terminal; and
sending, by the central node of the optical network, a second indication to the voice device according to the second digital control signal, to instruct the voice device to send, according to the second indication, an acknowledgement message to the central node of the optical network, to establish the voice channel.

6. The method according to any of the preceding claims, wherein the performing, by the central node of the optical network, voice encoding processing on the first digital voice signal sent by the remote node, to obtain first voice data comprises:
receiving, by the central node of the optical network, the first digital voice signal sent by the remote node, wherein the first digital voice signal is obtained by the remote node according to a first analog voice signal sent by a terminal;
performing, by the central node of the optical network, voice encoding processing on the first digital voice signal, to obtain a third digital voice signal; and
obtaining, by the central node of the optical network, the first voice data according to the third digital voice signal.

7. The method according to any of the preceding claims, wherein the performing, by the central node of the optical network, voice decoding processing on second voice data sent by the voice device, to obtain the second digital voice signal, and sending the second digital voice signal to the remote node by using the voice channel comprises:
receiving, by the central node of the optical network, the second voice data sent by the voice device;
obtaining, by the central node of the optical network, a fourth digital voice signal according to the second voice data;
performing, by the central node of the optical network, voice decoding processing on the fourth digital voice signal, to obtain the second digital voice signal; and
sending, by the central node of the optical network, the second digital voice signal to the remote node, so that the remote node obtains a second analog voice signal according to the second digital voice signal, and sends the second analog voice signal to a terminal.

8. The method according to any of the preceding claims, wherein the method further comprises:
receiving, by the central node of the optical network, a digital on-hook control signal sent by the remote node, wherein the digital on-hook control signal is obtained by the remote node according to an analog on-hook control signal sent by the terminal;
detecting, by the central node of the optical network, the digital on-hook control signal, to obtain an on-hook indication; and
sending, by the central node of the optical network, the on-hook indication to the voice device, so that the voice device releases a voice service resource according to the on-hook indication.

9. A central node of an optical network configured to perform any of the methods according to claims 1-8.

## Patentansprüche

1. Verfahren zum Implementieren eines Sprachdienstes, wobei das Verfahren umfasst:
separates Interagieren mit einer Sprachvorrichtung und einem Remote-Knoten durch einen zentralen Knoten eines optischen Netzwerks, und Durchführen von Zugangskontrolle für den Remote-Knoten, um einen Sprachkanal (S 201) aufzubauen; und
Durchführen von Sprachkodierverarbeitung an einem ersten digitalen Sprachsignal, welches durch den Remote-Knoten gesendet wurde, durch den zentralen Knoten des optischen Netzwerks, um erste Sprachdaten zu erhalten, und Senden der ersten Sprachdaten an die Sprachvorrichtung unter Verwendung des Sprachkanals; oder Durchführen von Sprachdekodierverarbeitung an zweiten Sprachdaten, die durch die Sprachvorrichtung gesendet wurden, durch den zentralen Knoten des optischen Netzwerks, um ein zweites digitales Sprachsignal zu erhalten, und Senden des zweiten digitalen Sprachsignals an den Remote-Knoten unter Verwendung des Sprachkanals (S 202),
wobei das separate Interagieren mit der Sprachvorrichtung und dem Remote-Knoten durch den zentralen Knoten des optischen Netzwerks und Durchführen von Zugangskontrolle für den Remote-Knoten umfasst:
Empfangen eines ersten digitalen Steuersignals, das durch den Remote-Knoten gesendet wurde, durch den zentralen Knoten des optischen Netzwerks, wobei das erste digitale Steuersignal von dem Remote-Knoten gemäß einem ersten analogen Steuersignal erhalten wird, das von einem Endgerät gesendet wurde, welches mit dem Remote-Knoten (S 606) verbunden ist;
Erkennen des ersten digitalen Steuersignals durch den zentralen Knoten des optischen Netzwerks, um ein zweites digitales Steuersignal des Endgeräts zu erhalten, welches mit dem Remote-Knoten (S 607) verbunden ist; und
Senden des zweiten digitalen Steuersignals an den Remote-Knoten durch den zentralen Knoten des optischen Netzwerks, so dass der Remote-Knoten ein zweites analoges Steuersignal entsprechend dem zweiten digitalen Steuersignal erhält und Zugangskontrolle für das Endgerät gemäß dem zweiten analogen Steuersignal (S 608) durchführt.

2. Verfahren nach Anspruch 1, wobei das Verfahren ferner umfasst:
Senden einer Sitzungsanforderungsnachricht an die Sprachvorrichtung durch den zentralen Knoten des optischen Netzwerks, so dass die Sprachvorrichtung eine Neuübertragungs-Stopp-Angabe an den zentralen Knoten des optischen Netzwerks entsprechend der Sitzungsanforderungsnachricht sendet; und
Stoppen des Sendens der Sitzungsanforderungsnachricht an die Sprachvorrichtung durch den zentralen Knoten des optischen Netzwerks gemäß der Neuübertragungs-Stopp-Angabe.

3. Verfahren nach Anspruch 1, wobei das Verfahren ferner umfasst:
Empfangen einer ersten Angabe, die durch die Sprachvorrichtung gesendet wurde, durch den zentralen Knoten des optischen Netzwerks;
Erhalten eines dritten digitalen Steuersignals entsprechend der ersten Angabe durch den zentralen Knoten des optischen Netzwerks; und
Senden des dritten digitalen Steuersignals an den Remote-Knoten durch den zentralen Knoten des optischen Netzwerks, so dass der Remote-Knoten ein drittes analoges Steuersignal entsprechend dem dritten digitalen Steuersignal erhält und Zugangskontrolle für das Endgerät gemäß dem dritten analogen Steuersignal durchführt, um den Sprachkanal aufzubauen.

4. Verfahren zum Implementieren eines Sprachdienstes, wobei das Verfahren umfasst:
separates Interagieren mit einer Sprachvorrichtung und einem Remote-Knoten durch einen zentralen Knoten eines optischen Netzwerks, und Durchführen von Zugangskontrolle für den Remote-Knoten, um einen Sprachkanal (S 201) aufzubauen; und
Durchführen von Sprachkodierverarbeitung an einem ersten digitalen Sprachsignal, welches durch den Remote-Knoten gesendet wurde, durch den zentralen Knoten des optischen Netzwerks, um erste Sprachdaten zu erhalten, und Senden der ersten Sprachdaten an die Sprachvorrichtung unter Verwendung des Sprachkanals; oder Durchführen von Sprachdekodierverarbeitung an zweiten Sprachdaten, die durch die Sprachvorrichtung gesendet wurden, durch den zentralen Knoten des optischen Netzwerks, um ein zweites digitales Sprachsignal zu erhalten, und Senden des zweiten digitalen Sprachsignals an den Remote-Knoten unter Verwendung des Sprachkanals (S 202),
wobei das separate Interagieren mit der Sprachvorrichtung und dem Remote-Knoten durch den zentralen Knoten des optischen Netzwerks und Durchführen von Zugangskontrolle für den Remote-Knoten umfasst:
Empfangen einer ersten Angabe, die durch die Sprachvorrichtung (S 701) gesendet wurde, durch den zentralen Knoten des optischen Netzwerks;
Erhalten eines ersten digitalen Steuersignals entsprechend der ersten Angabe durch den zentralen Knoten des optischen Netzwerks; und
Senden des ersten digitalen Steuersignals an den Remote-Knoten durch den zentralen Knoten des optischen Netzwerks, so dass der Remote-Knoten Zugangskontrolle für ein Endgerät gemäß dem ersten digitalen Steuersignal (S 703) durchführt.

5. Verfahren nach Anspruch 4, wobei das Verfahren ferner umfasst:
Empfangen eines zweiten digitalen Steuersignals, das durch den Remote-Knoten gesendet wurde, durch den zentralen Knoten des optischen Netzwerks, wobei das zweite digitale Steuersignal von dem Remote-Knoten gemäß einem ersten analogen Steuersignal erhalten wird, das von dem Endgerät gesendet wurde; und
Senden einer zweiten Angabe an die Sprachvorrichtung entsprechend dem zweiten digitalen Steuersignal durch den zentralen Knoten des optischen Netzwerks, um die Sprachvorrichtung anzuweisen, entsprechend der zweiten Angabe eine Bestätigungsnachricht an den zentralen Knoten des optischen Netzwerks zu senden, um den Sprachkanal aufzubauen.

6. Verfahren nach einem der vorhergehenden Ansprüche, wobei das Durchführen von Sprachkodierverarbeitung an dem ersten digitalen Sprachsignal, das durch den Remote-Knoten gesendet wurde, durch den zentralen Knoten des optischen Netzwerks, um erste Sprachdaten zu erhalten, umfasst:
Empfangen des ersten digitalen Sprachsignals, das durch den Remote-Knoten gesendet wurde, durch den zentralen Knoten des optischen Netzwerks, wobei das erste digitale Sprachsignal von dem Remote-Knoten gemäß einem ersten analogen Sprachsignal erhalten wird, das von einem Endgerät gesendet wurde;
Durchführen von Sprachkodierverarbeitung an dem ersten digitalen Sprachsignal durch den zentralen Knoten des optischen Netzwerks, um ein drittes digitales Sprachsignal zu erhalten; und
Erhalten der ersten Sprachdaten entsprechend dem dritten digitalen Sprachsignal durch den zentralen Knoten des optischen Netzwerks.

7. Verfahren nach einem der vorhergehenden Ansprüche, wobei das Durchführen von Sprachdekodierverarbeitung an zweiten Sprachdaten, die von der Sprachvorrichtung gesendet wurden, durch den zentralen Knoten des optischen Netzwerks, um das zweite digitale Sprachsignal zu erhalten, und Senden des zweiten digitalen Sprachsignals an den Remote-Knoten unter Verwendung des Sprachkanals umfasst:
Empfangen der zweiten Sprachdaten, die durch die Sprachvorrichtung gesendet wurden, durch den zentralen Knoten des optischen Netzwerks;
Erhalten eines vierten digitalen Sprachsignals entsprechend den zweiten Sprachdaten durch den zentralen Knoten des optischen Netzwerks;
Durchführen von Sprachdekodierverarbeitung an dem vierten digitalen Sprachsignal durch den zentralen Knoten des optischen Netzwerks, um das zweite digitale Sprachsignal zu erhalten; und
Senden des zweiten digitalen Sprachsignals an den Remote-Knoten durch den zentralen Knoten des optischen Netzwerks, so dass der Remote-Knoten ein zweites analoges Sprachsignal entsprechend dem zweiten digitalen Sprachsignal erhält und das zweite analoge Sprachsignal an ein Endgerät sendet.

8. Verfahren nach einem der vorhergehenden Ansprüche, wobei das Verfahren ferner umfasst:
Empfangen eines digitalen Aufgelegt-Steuersignals, das durch den Remote-Knoten gesendet wurde, durch den zentralen Knoten des optischen Netzwerks, wobei das digitale Aufgelegt-Steuersignal von dem Remote-Knoten entsprechend einem analogen Aufgelegt-Steuersignal erhalten wird, das von dem Endgerät gesendet wurde;
Erkennen des digitalen Aufgelegt-Steuersignals durch den zentralen Knoten des optischen Netzwerks, um eine Aufgelegt-Angabe zu erhalten; und
Senden der Aufgelegt-Angabe an die Sprachvorrichtung durch den zentralen Knoten des optischen Netzwerks, so dass die Sprachvorrichtung eine Sprachdienstressource gemäß der Aufgelegt-Angabe freigibt.

9. Zentraler Knoten eines optischen Netzwerks, der konfiguriert ist, um jedwedes der Verfahren gemäß den Ansprüchen 1 bis 8 durchzuführen.

## Revendications

1. Procédé de mise en oeuvre d'un service téléphonique, le procédé comprenant :
l'interaction, par un noeud central d'un réseau optique, avec un dispositif téléphonique et un noeud distant séparément, et la réalisation d'un contrôle d'accès pour le noeud distant, pour établir une voie téléphonique (S201) ; et
la réalisation, par le noeud central du réseau optique, d'un traitement de codage de la voix sur un premier signal vocal numérique envoyé par le noeud distant, pour obtenir des premières données vocales, et l'envoi des premières données vocales au dispositif téléphonique au moyen de la voie téléphonique ; ou la réalisation, par le noeud central du réseau optique, d'un traitement de décodage de la voix sur des deuxièmes données vocales envoyées par le dispositif téléphonique, pour obtenir un deuxième signal vocal numérique, et l'envoi du deuxième signal vocal numérique au noeud distant au moyen de la voie téléphonique (S202),
dans lequel l'interaction, par le noeud central du réseau optique, avec le dispositif téléphonique et le noeud distant séparément, et la réalisation d'un contrôle d'accès pour le noeud distant comprennent :
la réception, par le noeud central du réseau optique, d'un premier signal de commande numérique envoyé par le noeud distant, le premier signal de commande numérique étant obtenu par le noeud distant en fonction d'un premier signal de commande analogique qui est envoyé par un terminal connecté au noeud distant (S606) ;
la détection, par le noeud central du réseau optique, du premier signal de commande numérique, pour obtenir un deuxième signal de commande numérique du terminal connecté au noeud distant (S607) ; et
l'envoi, par le noeud central du réseau optique, du deuxième signal de commande numérique au noeud distant, de telle sorte que le noeud distant obtient un deuxième signal de commande analogique en fonction du deuxième signal de commande numérique, et effectue un contrôle d'accès pour le terminal en fonction du deuxième signal de commande analogique (S608).

2. Procédé selon la revendication 1, le procédé comprenant en outre :
l'envoi, par le noeud central du réseau optique, d'un message de requête de session au dispositif téléphonique, de telle sorte que le dispositif téléphonique envoie une indication d'arrêt de retransmission au noeud central du réseau optique en fonction du message de requête de cession ; et
l'arrêt, par le noeud central du réseau optique, en fonction de l'indication d'arrêt de retransmission, de l'envoi du message de requête de session au dispositif téléphonique.

3. Procédé selon la revendication 1, le procédé comprenant en outre :
la réception, par le noeud central du réseau optique, d'une première indication envoyée par le dispositif téléphonique ;
l'obtention, par le noeud central du réseau optique, d'un troisième signal de commande numérique en fonction de la première indication ; et
l'envoi, par le noeud central du réseau optique, du troisième signal de commande numérique au noeud distant, de telle sorte que le noeud distant obtient un troisième signal de commande analogique en fonction du troisième signal de commande numérique, et effectue un contrôle d'accès pour le terminal en fonction du troisième signal de commande analogique, pour établir la voie téléphonique.

4. Procédé de mise en oeuvre d'un service téléphonique, le procédé comprenant :
l'interaction, par un noeud central d'un réseau optique, avec un dispositif téléphonique et un noeud distant séparément, et la réalisation d'un contrôle d'accès pour le noeud distant, pour établir une voie téléphonique (S201) ; et
la réalisation, par le noeud central du réseau optique, d'un traitement de codage de la voix sur un premier signal vocal numérique envoyé par le noeud distant, pour obtenir des premières données vocales, et l'envoi des premières données vocales au dispositif téléphonique au moyen de la voie téléphonique ; ou la réalisation, par le noeud central du réseau optique, d'un traitement de décodage de la voix sur des deuxièmes données vocales envoyées par le dispositif téléphonique, pour obtenir un deuxième signal vocal numérique, et l'envoi du deuxième signal vocal numérique au noeud distant au moyen de la voie téléphonique (S202),
dans lequel l'interaction, par le noeud central du réseau optique, avec le dispositif téléphonique et le noeud distant séparément, et la réalisation d'un contrôle d'accès pour le noeud distant comprennent :
la réception, par le noeud central du réseau optique, d'une première indication envoyée par le dispositif téléphonique (S701) ;
l'obtention, par le noeud central du réseau optique, d'un premier signal de commande numérique en fonction de la première indication ; et
l'envoi, par le noeud central du réseau optique, du premier signal de commande numérique au noeud distant, de telle sorte que le noeud distant effectue un contrôle d'accès pour un terminal en fonction du premier signal de commande numérique (S703).

5. Procédé selon la revendication 4, le procédé comprenant en outre :
la réception, par le noeud central du réseau optique, d'un deuxième signal de commande numérique envoyé par le noeud distant, le deuxième signal de commande numérique étant obtenu par le noeud distant en fonction d'un premier signal de commande analogique envoyé par le terminal ; et
l'envoi, par le noeud central du réseau optique, d'une deuxième indication au dispositif téléphonique en fonction du deuxième signal de commande numérique, pour donner l'instruction au dispositif téléphonique d'envoyer, en fonction de la deuxième indication, un message d'accusé de réception au noeud central du réseau optique, pour établir la voie téléphonique.

6. Procédé selon l'une quelconque des revendications précédentes, dans lequel la réalisation, par le noeud central du réseau optique, d'un traitement de codage de la voix sur le premier signal vocal numérique envoyé par le noeud distant, pour obtenir des premières données vocales comprend :
la réception, par le noeud central du réseau optique, du premier signal vocal numérique envoyé par le noeud distant, le premier signal vocal numérique étant obtenu par le noeud distant en fonction d'un premier signal vocal analogique envoyé par un terminal ;
la réalisation, par le noeud central du réseau optique, d'un traitement de codage de la voix sur le premier signal vocal numérique, pour obtenir un troisième signal vocal numérique ; et
l'obtention, par le noeud central du réseau optique, des premières données vocales en fonction du troisième signal vocal numérique.

7. Procédé selon l'une quelconque des revendications précédentes, dans lequel la réalisation, par le noeud central du réseau optique, d'un traitement de décodage de la voix sur des deuxièmes données vocales envoyées par le dispositif téléphonique, pour obtenir le deuxième signal vocal numérique, et l'envoi du deuxième signal vocal numérique au noeud distant au moyen de la voie téléphonique comprennent :
la réception, par le noeud central du réseau optique, des deuxièmes données vocales envoyées par le dispositif téléphonique ;
l'obtention, par le noeud central du réseau optique, d'un quatrième signal vocal numérique en fonction des deuxièmes données vocales ;
la réalisation, par le noeud central du réseau optique, d'un traitement de décodage de la voix sur le quatrième signal vocal numérique, pour obtenir le deuxième signal vocal numérique ; et
l'envoi, par le noeud central du réseau optique, du deuxième signal vocal numérique au noeud distant, de telle sorte que le noeud distant obtient un deuxième signal vocal analogique en fonction du deuxième signal vocal numérique, et envoie le deuxième signal vocal analogique à un terminal.

8. Procédé selon l'une quelconque des revendications précédentes, le procédé comprenant en outre :
la réception, par le noeud central du réseau optique, d'un signal de commande de raccrochage numérique envoyé par le noeud distant, le signal de commande de raccrochage numérique étant obtenu par le noeud distant en fonction d'un signal de commande de raccrochage analogique envoyé par le terminal ;
la détection, par le noeud central du réseau optique, du signal de commande de raccrochage numérique, pour obtenir une indication de raccrochage ; et
l'envoi, par le noeud central du réseau optique, de l'indication de raccrochage au dispositif téléphonique, de telle sorte que le dispositif téléphonique libère une ressource de service téléphonique en fonction de l'indication de raccrochage.

9. Noeud central d'un réseau optique configuré pour effectuer l'un quelconque des procédés selon les revendications 1 à 8.
